# EUROPEAN PATENT APPLICATION

(11) **EP 1 059 226 A1**
(43) Date of publication of application: **13.12.2000**
(21) Application number: 99830361.4
(22) Date of filing: 11.06.1999
(51) Int. Cl.: B62K 21/06, B62K 21/22

(54) **Device for fastening and adjusting bicycle handlebars**

(71) Applicant: Bike Techno Racing di Biondi Giancarlo, 47023 Cesena (IT)
(72) Inventor: Biondi, Giancario, 47023 Cesena (IT)
(74) Representative: Lanzoni, Luciano

(57) **Abstract**

Device for fastening and adjusting bicycle handlebars comprising at least a cap (10), able to be fitted onto the top of the sleeve (4) of the fork (5) of a bicycle and able to be interposed between it and the collar (2) for attaching the handlebar (3), said cap (10) being provided, on its top (11) with a controlling organ (77) to adjust handlebar steering play and providing such a height as to bear, inferiorly, in correspondence with the upper thrust bearing (81) of the sleeve (9) of the frame, whilst superiorly being raised, with respect to the free end of the sleeve (4) of the fork (5), by such a measure as to allow a proper travel for the axial adjustment of the steering play, independent from the adjustment of the fastening height of the collar (2) for attaching the handlebar (3), able to be stably positioned, along the entire useful length of said cap (2).

## Description

The present invention relates to a device for fastening and adjusting bicycle handlebars, of the type comprising:
- a handlebar attachment collar, in correspondence with the top of the fork sleeve;
- an organ for adjusting the handlebar steering play;
- a pair of upper and lower thrust bearings, situated at the ends of the frame sleeve,
within which is concentrically located the fork sleeve.

As is well known, many bicycles and in particular touring bicycles are provided with devices for fastening and adjusting the handlebar wherein the latter is fitted with a vertical tube engageable inside the fork sleeve and therein able to be fastened, at the desired altitude, by the external activation of a device able to expand within the sleeve, until rendering the handlebar integral with the sleeve itself.

To adjust instead the so-called "steering play", i.e. to adapt the effort needed to rotate the handle to the user's requirements, ring nuts and nuts or lock nuts are provided, to be activated in correspondence with the top of the fork sleeve, where a thread that is vertically projected outward is provided. Their activation allows to load or unload the underlying thrust bearings, situated at the ends of the frame sleeve, within which is concentrically located the fork sleeve, whose free rotation about its axis and hence the rotation of the handlebar integral thereto, is thus conditioned.

This first kind of device allows to adjust the height of the handlebar independently from its steering, but is rather heavy and unsuitable for racing or very sporty bicycles, also due to the non negligible torsion whereto the handlebar is subjected.

Therefore, a device for fastening and adjusting the handlebar has been realised that is much lighter and resistant to torsion, comprising a handlebar attachment constituted by a simple collar, engageable directly on the portion of fork sleeve projecting vertically upward and able to be fastened thereto with a vice like grip with only two lateral screws. Height adjustment is, however, determined by spacers (normally three) of preset height and also engageable to the external sleeve portion coaxially and in contact with said collar. Both each spacer and the top of said collar, depending on whether one or more thereof is placed over the collar, or all of them are placed under it, are able to bear against an upper cover through which can be introduced a screw which engages in an internal threaded insert, integral with the fork sleeve. Since the collar and the spacers insist on the underlying thrust bearings of the frame sleeve, when the screw is acted upon, at a certain point the bearings themselves are loaded until reaching the required adjustment of the steering play.

This sophisticated device, which allows considerably to reduce the weight of the bicycle steering assembly - a very important fact for racing bicycles - nonetheless presents multiple drawbacks.

It does not allow to adjust the height of the handlebar independently from the steering play: it is always necessary to loosen the screw that adjusts the steering play, in order to operate on the spacers. Conversely, the adjustment of the steering play is easily influenced even when the user wants to operate (locking/unlocking to or from the sleeve) on the collar of the handlebar attachment. Another disadvantage is due to the fact that changes to the height of the handlebar are limited to the measure of the height of one of the spacers or to multiples thereof, and hence are not continuous. Moreover, since the height of the spacer-collar assembly needs to be maintained slightly greater than that of the projecting portion of the sleeve, to maintain the functionality of the steering play adjustment organ it is necessary, in order to change handlebar height, to move the spacer from under to over the collar, or vice versa. Alternatively, the only possible choice would be to cut off part of the sleeve, after unlocking the threaded insert and repositioning it inside the projecting sleeve.

As is readily apparent, therefore, these devices, each with its own advantages and disadvantages, are far from optimal, if taken individually.

The technical problem constituting the basis of the invention, as it is characterised in the claims, is that of providing a device for fastening and adjusting bicycle handlebars which includes all the advantages of known devices, without however absorbing their characteristic defects.

The aim of the invention is to eliminate all the aforementioned drawbacks.

The invention presents the advantage of allowing to disassemble and reassemble the handlebar and adjust its height without thereby altering the adjustment of the load on the bearings that allow steering.

In practice, the invention eliminates the need to adjust the load that acts on the bearings every time one operates on the collar of the handlebar attachment either to vary its altitude or even to change its orientation. Adjusting the load on the bearings is an operation for specialists, whilst replacing the handlebar and/or adjusting its height is an ordinary operation.

Using the invention therefore allows even normal users to adjust the height of the handlebar attachment and/or replace it, since it does not require a specialised operation to adjust the load on the bearings.

Adjusting the height of the handlebar, thanks to the invention, is allowed for a continuous vertical excursion, not allowed in the more sophisticated devices. Moreover, the subject device, in one of its embodiments, minimises the vibrations of the steering assembly.

Further features and advantages of the invention shall be made more readily apparent from the detailed description that follows, illustrated purely by way of non limiting example in the accompanying drawings, wherein:
- Figure 1 shows a side view of the invention, with the left side sectioned and the right side visible;
- Figure 2 shows a plan view of the invention of Figure 1;
- Figure 3 shows a deformable band usable in an embodiment of the invention.

With reference to the aforesaid figures, the subject device is of the type comprising:
- a collar (2) for attaching the handlebar (3), in correspondence with the top of the sleeve (4) of the fork (5);
- an organ (71) for adjusting the steering play of the handlebar;
- a pair of thrust bearings (8), upper (81) and lower (82), situated at the ends of the frame sleeve (9), within which the sleeve (4) of the fork (5) is concentrically located.

The invention comprises a cap (10), which can be fitted onto the top of the sleeve (4) of the fork (5) and can be interposed between the sleeve (4) and the collar (2). The cap (10) is provided, at its top (11), with an organ (77) for controlling the adjusting organ (71) and has such a height as to bear, inferiorly, in correspondence with the upper thrust bearing (81), whereas superiorly it is raised, with respect to the free end of the sleeve (4) of the fork (5), by such a measure as to allow a proper axial travel for the adjustment of the steering play, independent from the adjustment of the fastening height of the collar (2) of the handlebar attachment (3), able to be stably positioned along the entire useful height of said cap (10). The control organ (77) is simply constituted by an adjustment screw (7), whose head is housed in a seat (12) obtained on the top (11) of the cap (10), whilst the adjustment organ (71) comprises a threaded insert (6), integral and internal to the sleeve (4) of the fork (5), whereon the screw (7) itself is engageable. When a user operates on the adjustment screw (7), after the tightening operation brings its head to bear against the seat (12), an axial force (FA) originates which tends to pull the sleeve (4) of the fork (5) upwards, with an opposite reaction of the base (17) of the cap (10), which loads the thrust bearings (81,82), until the required adjustment of the steering play is reached.

Advantageously, this adjustment is, as stated, completely independent from the adjustment of the fastening height of the collar (2), able to be positioned stably at any height, along the entire useful length of the cap (10). Such positioning is obtained simply by tightening the collar (2), by means of its own fastening screws (21), to the cap (10) which, thus stressed, exerts a veritable grip on the sleeve (4), according to a radial force (FR), perpendicular to the axial force (FA).

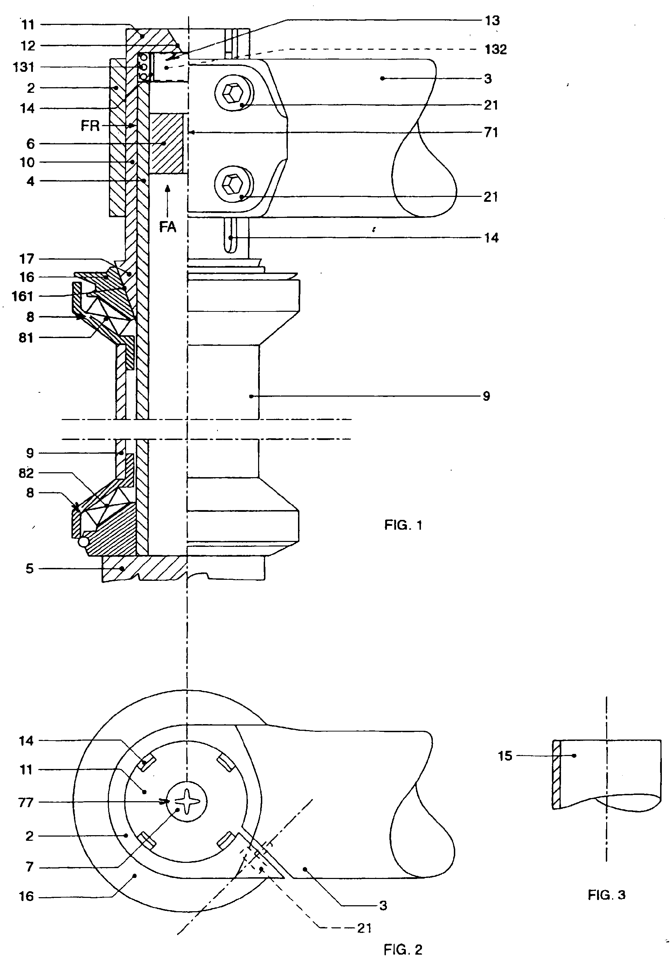

As shown in Figure 1, the device comprises an elastic element (13) interposed between the top (11) ofthe cap (10) and the free end of the sleeve (4) of the fork (5), constituted by a spring (131) or by a deformable pad (132). In this way any danger of accidental loosening of the screw (7) is eliminated, since the spring is subjected to a calibrated contrast with the cap (10).

To increase its elastic deformation under radial strain of the cap (10), the device comprises a plurality of longitudinal slits (14), whose number depends on the thickness of the cap (10) and on the selected embodiment of the device. An alternative embodiment to that of Figure 1 can be that of providing a deformable band (15), shown in Figure 3, made of rubber-based or plastic material, able to be interposed between the cap (10) and the sleeve (4) of the fork (5). This embodiment allows, thanks to the elasticity of the band, drastically to reduce the vibrations located in the steering assembly, to improve the grip of the cap (10) on the sleeve (4) and to allow the device to be sealed hermetically.

Obviously, further variations to the above illustration are possible without thereby departing from the scope of the claims that follow.

For example, the cap (10) can have constant external diameter, with its internal diameter varying according to the dimensions of the sleeve (4) whereto it is to be applied, serving in this case also as an adapter for the various types of sleeve, thus allowing a single uniform measure for the handlebar collar attachment. The base of the cap (10) can obviously be cylindrical, conforming to its shape, but a further variation, in the frequent cases wherein the upper thrust bearing (81) is superiorly in contact with an annular element (16) provided inside a truncated cone surface (161), is that of providing for the cap (10) to have a base (17) shaped according to a truncated cone complementary to said truncated cone surface (161), as in the example shown in Figure 1.

## Claims

1. Device for fastening and adjusting bicycle handlebars, of the type comprising:
- a collar (2) for attaching the handlebar (3), in correspondence with the top of the sleeve (4) of the fork (5);
- an organ (71) for adjusting the handlebar steering play;
- a pair of upper (81) and lower (82) thrust bearings (8), situated at the ends of the sleeve (9) frame, within which is concentrically located the sleeve (4) of the fork (5);
characterised in that it comprises at least:
a cap (10), able to be fitted onto the top of the sleeve (4) of the fork (5) and able to be interposed between it and the collar (2), said cap (10) being provided, on its top (11), with an organ (77) for controlling said adjustment organ (77) and providing for such a height as to bear, inferiorly, in correspondence with the upper thrust bearing (81), while being raised superiorly, with respect to the free end of the sleeve (4) of the fork (5), by such a measure as to allow a proper axial travel for the adjustment of the steering play, independent from the adjustment of the fastening height of the collar (2), of the attachment of the handlebar (3), able to be stably positioned, along the entire useful height of said cap (10).

2. Device according to claim 1, characterised in that it comprises an elastic element (13), interposed between the top (11) of the cap (10) and the free end of the sleeve (4) of the fork (5).

3. Device according to claim 1 or 2, characterised in that the cap (10) comprises longitudinal slits (14) able to increase its elastic deformation under radial strain.

4. Device according to any of the previous claims, characterised in that it comprises a deformable band (15), able to be interposed between the cap (10) and the sleeve (4) of the fork (5).

5. Device according to any of the previous claims, wherein the upper thrust bearing (81) is superiorly in contact with an annular element (16) internally provided with a truncated cone surface (161), characterised in that the cap (10) comprises a base (17) shaped according to a truncated cone complementary to said truncated cone surface (161).

6. Device according to claim 2, characterised in that said elastic element (13) is a spring (131).

7. Device according to claim 2, characterised in that said elastic element is a deformable pad (132).

8. Device according to claim 4, characterised in that the deformable band (15) is made of rubber-based material.

9. Device according to claim 4, characterised in that the deformable band (15) is made of plastic material.

10. Device according to claim 1, characterised in that said control organ (77) comprises an adjustment screw (7), whereas the adjustment organ (71) comprises a threaded insert (6), integral and internal to the sleeve (4) of the fork (5), whereon the screw itself (7) can be engaged.

11. Device according to any of the previous claims, characterised in that the cap (10) externally presents a single diameter measure, whilst internally it presents a diameter that varies according to the type of sleeve (4) of the fork (5) whereto it is to be applied.
